# EUROPÄISCHE PATENTSCHRIFT

(11) **EP 2 440 855 B1**
(45) Veröffentlichungstag und Bekanntmachung des Hinweises auf die Patenterteilung: **13.04.2016**
(21) Anmeldenummer: 10719947.3
(22) Anmeldetag: 31.05.2010
(51) Int. Cl.: F24H 1/43, F24H 1/44, F24H 9/00, F24D 7/00, F24H 8/00, F28F 9/02, F28D 7/00, F28D 7/02, F28D 9/00, F28D 21/00

(54) **GLIEDERHEIZKESSEL**
SECTIONAL BOILER
CHAUDIÈRE SECTIONNÉE

(30) Priorität: 10.06.2009 DE 102009024442
(43) Veröffentlichungstag der Anmeldung: 18.04.2012
(73) Patentinhaber: Robert Bosch GmbH, 70442 Stuttgart (DE)
(72) Erfinder: RAUSCH, Rainer, 36304 Alsfeld (DE)
(86) Internationale Anmeldenummer: PCT/EP2010/057548
(87) Internationale Veröffentlichungsnummer: WO 2010/142552

(56) Entgegenhaltungen:
- WO-A1-2009/052834
- DE-U1- 29 906 486
- FR-A1- 2 846 075
- US-A1- 2007 209 606

## Beschreibung

Die Erfindung betrifft einen Gliederheizkessel, insbesondere einen Brennwertkessel aus Gusseisen- oder Aluminium-Werkstoffen, nach dem Oberbegriff des Patentanspruches 1.

Derartige Gliederheizkessel bestehen aus mehreren einstückig gegossenen Kesselgliedem, welche hintereinander angeordnet und wasserseitig üblicherweise durch Naben miteinander verbunden sind. Dabei werden die von den Kesselgliedern gebildeten Wasserkanäle und -taschen zwischen dem Rücklaufanschluss und dem Vorlaufanschluss durchströmt. In der Regel besitzen gattungsgemäße Gliederheizkessel einen unteren Rücklaufanschluss und einen oben angeordneten Vorlaufanschluss, vorzugsweise in der jeweiligen Nabe. Die Heizgase strömen vom Brennraum über nachgeschaltete Heizgaszüge zu einem Abgasstutzen und geben auf Ihrem Weg Wärme an das Kesselwasser ab.

Bei allen bisherigen Kesseln dieser Art sind die Glieder in Reihe hintereinander angeordnet. Es gibt ein ringförmiges Vorderglied, an dem eine Brennraumtür oder eine Brennerplatte befestigt werden kann, je nach Leistungsgröße ein oder mehrere ähnlich gestaltete Mittelglieder sowie ein Hinterglied. Dabei erstreckt sich der Brennraum durch Vorder- und Mittelglieder bis zum Hinterglied, welches mit seiner deckelförmigen Gestaltung den Boden des Brennraumes bildet. Alle Kesselglieder besitzen bei diesen Ausführungsformen ähnliche äußere Abmessungen, weil sie über den gesamten Kesselquerschnitt Teile von Brennraum, Heizgaszügen und Wasserraum bilden. Weiterhin sind auch Kessel für niedrige Leistungsbereiche bekannt, die aus nur zwei oder gar nur einem Kesselglied bestehen.

Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase aus und es wird zusätzlich zur fühlbaren Wärme die Kondensationswärme auf das Heizwasser übertragen.

Bei einer Verwendung als Brennwertkessel muss besonders Wert auf die Werkstoffauswahl gelegt werden, denn auf Grund der Zusammensetzung des verwendeten Brennstoffs und der Verbrennungsführung sind die Abgase schadstoffbelastet und das anfallende Kondenswasser weist verschiedene Säuren in geringer Konzentration auf. Die von Kondenswasser berührten Bauteile wie Heizflächen, Abgassammler und Abgasleitung müssen also gegenüber den Säuren resistent sein, weshalb es üblich ist, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung, wie beispielsweise auch in der DE 10 2004 023 711 B3 als Spiralrohrwicklung offenbart. Sie bieten den Vorteil, die Säurebelastung ohne Korrosion zu ertragen. Nachteilig sind die mit dem Werkstoff verbundenen hohen Kosten sowie besonders bei Schweißkonstruktionen aus Blechen die ungünstigeren Skalierbedingungen und die größeren, in räumlich engen Verhältnissen schwer montierbaren Baugrößen.

Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Gusssegmenten erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Lediglich für den Brennwertbetrieb mit länger anhaltendem Kondenswasseranfall ist Gusseisen in seiner heutigen Form und Gestaltung nicht geeignet.

Weiterhin ist aus der DE 296 21 817 U1 ein Brennwertheizkessel mit integriertem und hydraulisch nachgeschaltetem Kompaktwärmetauscher aus korrosionsbeständigem Werkstoff bekannt. Dieser Kompaktwärmetauscher ist als separates Bauteil von zwei schalenförmigen Kesselgliedern umschlossen und wasserseitig gesondert angeschlossen. Alle Kessel mit nachgeschaltetem Wärmetauscher haben die Nachteile, dass der Montageaufwand durch die erforderlichen Rohrteile erhöht wird und der wasserseitige Widerstand ansteigt. Die Anordnung als separates, außen liegendes Bauteil bewirkt ebenfalls Abkühlverluste, die durch eine geeignete Wärmedämmung vermindert werden müssen.

Aus der DE 44 25 302 C2 ist das Anordnen von Vor- und Rücklaufanschluss in einer gemeinsamen im oberen Kesselnabe bekannt. Es wird dabei eine Mischzone im oberen Bereich eines gemeinsamen Wasserraumes ausgebildet, so dass das eintretende kalte Rücklaufwasser mit aufsteigendem heißen Vorlaufwasser vorgewärmt wird. Dadurch wird Kondensation im Bereich der Heizflächen bewusst vermieden.

Die DE 299 06 486 U beschreibt einen Wärmetauscher für ein Wasserheizgerät, der aus mehreren Rohren aufgebaut ist und bei dem alle Rohrbögen sich nahezu über 360° erstrecken und im Bereich ihrer beiden Enden mit Ausleitungen versehen sind, wobei die einander benachbarten Rohrbögen gegeneinander um ein geringes Maß versetzt sind und alle zweiten Rohrbögen eine gemeinsame Achse aufweisen. Die Ausleitungen sind über einen Wasserkasten miteinander verbunden, wobei die einzelnen Rohrbögen durch einen Verteileinsatz in Reihe oder parallel oder auch gruppenweise in Reihe oder parallel geschaltet werden können.

Aus der US 2007 209 606 ist ein Wärmetauscher bekannt, welcher ein Gehäuse mit einander axial gegenüberliegenden Enden aufweist, die mit einer Brenneröffnung bzw. mit einem Verbrennungsgasauslass versehen sind, eine Wärmeaustausch-Rohrschlange, die eine Vielzahl von Schleifen aufweist, die über eine Vielzahl von Zwischenräumen in Axialrichtung in dem Gehäuse angeordnet sind, einen Raum, der von der Rohrschlange umgeben ist und mit einem Ende mit der Brenneröffnung in Verbindung steht, eine Trennwand, um zu verhindern, dass in den Raum eingeleitetes Verbrennungsgas direkt durch ein anderes Ende des Raums hindurchströmt, und um zu bewirken, dass das Verbrennungsgas zu den Zwischenräumen strömt; und einen Verbrennungsgasweg, der um die Rohrschlange herum gebildet ist, um das Verbrennungsgas zum Verbrennungsgasauslass zu führen.

Der Erfindung liegt die Aufgabe zugrunde, einen Gliederheizkessel aus Gusseisen oder Aluminium als Brennwertkessel insbesondere im Hinblick auf Kompaktheit und Robustheit zu optimieren.

Erfindungsgemäß wird dies mit den Merkmalen des Patentanspruches 1 gelöst. Vorteilhafte Weiterbildungen sind den Unteransprüchen zu entnehmen.

Der Gliederheizkessel mit im Wesentlichen ringförmigen Gliedern, wobei ein Vorderglied, mindestens ein Hinterglied und mindestens ein Mittelglied vorgesehen sind, die einen Brennraum mit einem im Wesentlichen umgebenden Wärmetauscher aus einem Gliederblock bilden, dessen ringförmige Wasserräume miteinander in Verbindung stehen und welcher spaltartige Heizgaszüge aufweist, die sich zwischen zwei benachbarten Gliedern mit einer einander zugeordneten Geometrie etwa radial erstrecken und in einen Abgassammelraum einmünden, sowie mit einem Rücklaufanschluss und einem Vorlaufanschluss, wobei der Rücklaufanschluss und der Vorlaufanschluss auf gegenüber liegenden Seiten des Gliederblockes angebracht sind, wobei die Wasserräume aller Glieder, ausgehend vom Rücklaufanschluss, nacheinander in Reihe durchströmt werden, und wobei die einzelnen Glieder jeweils nur an einer Stelle am Umfang mit wasserseitigen Überströmöffnungen versehen und mit diesen auf mindestens einer Seite mit einem benachbarten Glied verbunden sind, ist dadurch gekennzeichnet, dass der Gliederheizkessel aus Gusseisen oder Aluminium besteht, und dass die Überströmöffnungen als hydraulische Verbindung in das jeweils benachbarte Glied dienen, und dass jeweils im Verbindungsbereich innerhalb der Überströmöffnungen mindestens ein Strömungsleitmittel im Wasserraum angebracht ist.

In einer Ausführungsform besteht das Strömungsleitmittel im Verbindungsbereich des Wasserraumes aus einer im Wesentlichen den Wasserraum quer aufteilenden, etwa vertikal zur Achse des Verbindungsbereiches ausgerichteten Wand, welche den jeweiligen Strömungskanal verschließt sowie die eintretende Strömung aus der Axial- in die Umfangsrichtung lenkt und die austretende Strömung aus der Umfangs- in die Axialrichtung ins benachbarte Glied lenkt. Vorzugsweise ist diese Wand etwa im Winkel von 30 bis 50 Grad schräg im jeweiligen Strömungskanal angeordnet und kann auch eine Krümmung aufweisen.

Rücklaufanschluss, Vorlaufanschluss und Überströmöffnungen zwischen zwei benachbarten Gliedern sind auf einer Achse fluchtend angeordnet, wobei die Überströmöffnungen nur an einer Stelle am Umfang der Glieder, vorzugsweise im oberen Bereich, vorhanden sind.

Die Heizgaszüge sind unterteilt in einen Primärabschnitt, gebildet von dem Vorderglied und mindestens einem Mittelglied sowie einen Sekundärabschnitt, gebildet von mindestens zwei Hintergliedern. Dabei verlaufen im Primärabschnitt die Heizgaszüge jeweils ausgehend vom Brennraum etwa radial nach außen und münden in einen Abgassammelraum auf der Außenseite der Glieder ein. Dort strömen die Heizgase in den Sekundärabschnitt über, wobei in diesem mindestens ein Heizgaszug ausgehend vom Abgassammelraum etwa radial nach innen zu einem Abgasstutzen verläuft.

Angeordnet ist der Abgasstutzen auf der gemeinsamen Mittelachse von Gliedern und Brennraum. Daher besitzen die mindestens zwei Hinterglieder in Verlängerung des Abgasstutzens mindestens eine Durchbrechung, welche innerhalb des brennraumnahen Hintergliedes mit einem bei Bedarf, zum Beispiel zu Kontroll- und Reinigungszwecken, herausnehmbaren Verschlussstopfen heizgasseitig verschlossen ist.

In einer bevorzugten Ausführungsform weisen die mindestens zwei Hinterglieder jeweils im Wasserraum eine auf der Symmetrieachse verlaufende, gegenüber dem Verbindungsbereich etwa um 180 Grad versetzt angeordnete Trennwand zwischen der Wand der Durchbrechung und der Innenseite der äußeren Begrenzungswand auf, welche den Wasserraum jeweils in zwei Hälften teilt. Weiterhin besitzen die mindestens zwei Hinterglieder jeweils im Wasserraum eine symmetrisch angeordnete, auf einem Großteil eines Teilkreises umlaufende und im Bereich der Trennwand zwischen der Wand der Durchbrechung und der Innenseite der äußeren Begrenzungswand ausgesparte Wand. Dadurch wird das Rücklaufwasser in jedem Hinterglied, ausgehend vom oberen Rücklaufanschluss im äußeren Hinterglied, mit dem Strömungsleitmittel zunächst in einer Hälfte des Gliedes außerhalb der umlaufenden Wand nach unten gelenkt, strömt nahe der Trennwand in den inneren, durchmesserkleineren Strömungskanal innerhalb umlaufenden Wand ein, gelangt um den Abgasstutzen herum, strömt dann auf der anderen Seite der Trennwand wieder außerhalb der umlaufenden Wand nach oben und tritt, somit nach Abschluss des Umlaufs auf Gliedebene, im Verbindungsbereich auf der Rückseite des Strömungsleitmittels in das benachbarte, in Strömungsrichtung nachfolgende Glied über.

In einer weiteren alternativen und/oder ergänzenden Ausführungsform weisen die einzelnen Glieder jeweils heizwasserseitig mindestens eine umlaufende Trennwand auf und sind in mindestens einen inneren, brennkammemahen Strömungskanal und mindestens einen äußeren, durchmessergrößeren Strömungskanal aufgeteilt. Dabei besitzt der innere, brennkammemahe Strömungskanal einen geringeren Querschnitt als der äußere, brennkammerfeme Strömungskanal. In jedem Glied wird zunächst der äußere und danach der innere Strömungskanal durchströmt.

Die Strömungsleitmittel bestehen bei der vorstehenden alternativen und/oder ergänzenden Ausführungsform im Wesentlichen aus einer vertikal auf der in Umfangsrichtung verlaufenden Trennwand stehenden Wand, welche den jeweiligen Strömungskanal verschließt. Auch hierbei ist diese quer angeordnete Barriere ist vorzugsweise schräg innerhalb eines Strömungskanals angeordnet und kann eine Krümmung aufweisen. Im Vorderglied ist in diesem Fall im Bereich der Strömungsleitmittel in den Kanälen eine Überströmöffnung in der in Umfangsrichtung verlaufenden Trennwand zwischen den Kanälen angeordnet. Vorteilhafterweise sind die jeweiligen Strömungsleitmittel im inneren und äußeren Strömungskanal so angeordnet, dass diese sich kreuzen.

Mit der Erfindung wird ein Gliederheizkessel mit bester Eignung für Brennwertbetrieb geschaffen, bei dem die positiven Werkstoffeigenschaften von Gusseisen oder Aluminium gezielt angewendet und genutzt werden, um gute Wärmeübertragungseigenschaften, Kompaktheit und Robustheit zu gewährleisten. Es werden Korrosion auslösende Belastungen aufgefangen. Auch eine Korrosionsschutzbeschichtung ist erfindungsgemäß nicht nur einfach aufzubringen und zu kontrollieren, sondern sie wird auch in den Spalten vor möglichen mechanischen Belastungen geschützt.

Mit der Aufteilung der Wasser- und Heizgasseite in einen Primär- und einen Sekundärabschnitt wird ein intensiver, den in den jeweiligen Bereichen vorherrschenden Temperaturen optimal angepasster Wärmetausch erreicht. Im Sekundärabschnitt erfolgt sogar noch auf der Außenseite des äußeren Hintergliedes, also im Spalt zum Deckel des Abgassammlers, eine Abkühlung der Heizgase. Dies erhöht die Wärmeübertragungsfläche zusätzlich. Aus der Gesamtanordnung resultiert ein sehr hoher Wirkungsgrad, ohne dass die Komplexität der Bauteile steigt und ohne dass Einschränkungen bei der Reinigungsfähigkeit entstehen.

Die Gliederbauweise bietet neben der einfachen Herstellung auch den Vorteil, durch das Einfügen weiterer Mittelglieder unterschiedliche Längen für verschiedene Feuerungs- und Wärmetauscherleistungen variabel abzudecken. Trotzdem bleiben dann alle vorzugsweise stirnseitig angeordneten Anbauteile sowie die wasserseitigen Verbindungen gleich. Nur der umgebende Mantel um den Abgassammelraum variiert. Wegen der niedrigen Abgastemperaturen kann dieser sogar aus Kunststoff hergestellt werden.

Durch die Aufteilung in zwei Strömungskanäle, beschrieben als zweite Ausführungsform, also außen das kühlere und innen das heißere Heizwasser, ist die Temperaturverteilung im Wärmetauscher optimiert und die Effektivität gegenüber bekannten Prinzipien gesteigert. Außerdem wird die Strömungsführung ausschließlich durch das Design der Glieder bewirkt, denn es sind keine weiteren Bauteile wie zum Beispiel Einspeise- und/oder Entnahmerohre erforderlich. Beim erfindungsgemäßen Aufbau werden die einzelnen Segmente seriell durchströmt. Die Verbindung der Segmente erfolgt an nur einer Stelle und eine zweite Nabe ist nicht erforderlich. Dadurch wird die effektive Wärmetauscherfläche des Heizgerätes vergrößert.

Die Zeichnung stellt ein Ausführungsbeispiel der Erfindung dar. Es zeigt einen Gliederheizkessel aus Gusseisen oder Aluminium:

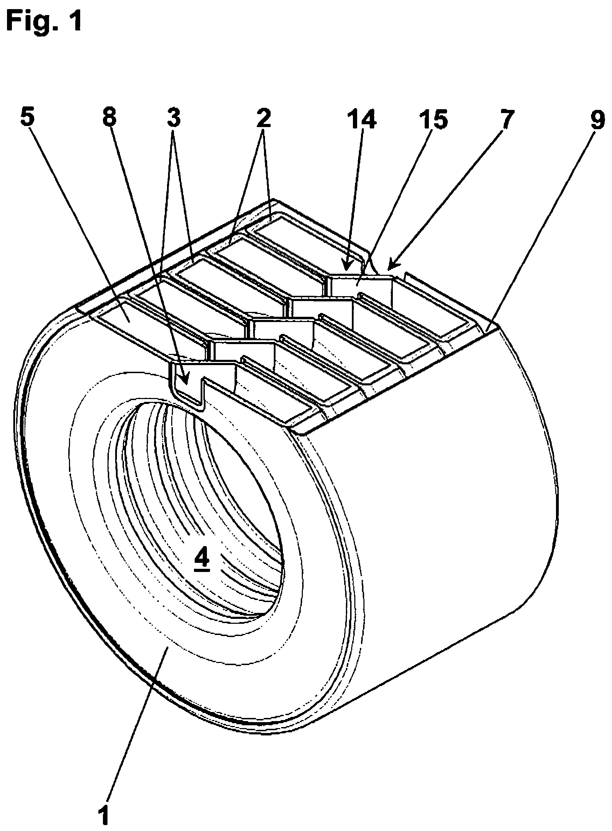

- Fig. 1:: in einer perspektivischen Gesamtansicht mit einem Schnitt im oberen Bereich,

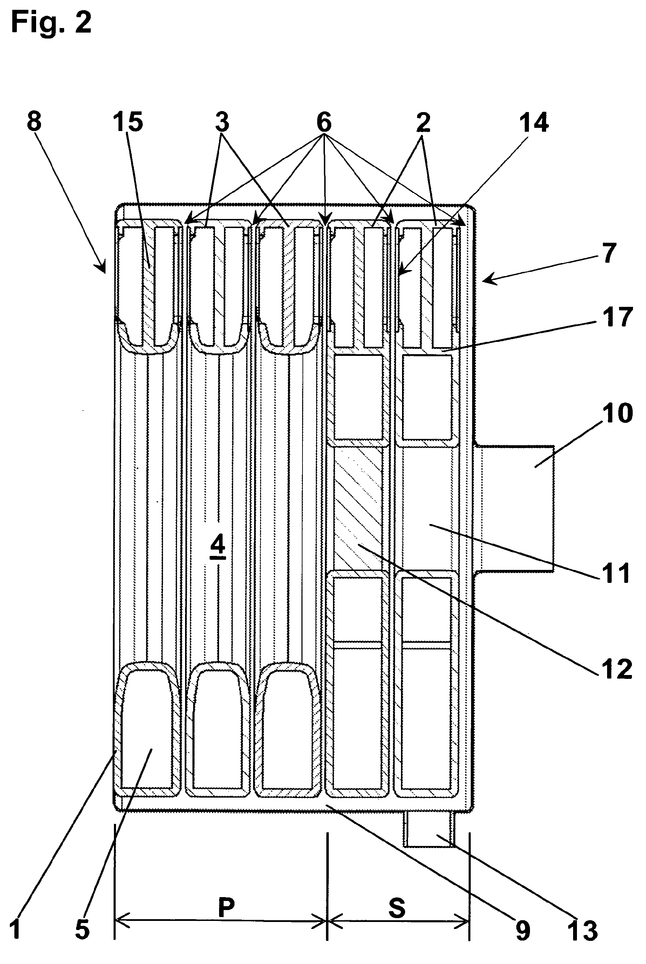

- Fig. 2:: in einem vertikalen Längsschnitt durch die Gesamtanordnung,
- Fig. 3:: ein Hinterglied in der Vorderansicht,
- Fig. 4:: ein Hinterglied in einer perspektivischen Darstellung mit einem halbseitigen Schnitt,
- Fig. 5:: ein Mittelglied in einer zweiten Ausführungsform mit zwei umlaufenden Strömungskanälen in der Vorderansicht,
- Fig. 6:: die Gesamtanordnung in einer zweiten Ausführungsform mit zwei umlaufenden Strömungskanälen gemäß Fig. 5 in einer perspektivischen Gesamtansicht mit einem Schnitt im oberen Bereich,
- Fig. 7:: ein Mittelglied in einer zweiten Ausführungsform mit zwei umlaufenden Strömungskanälen gemäß den Fig. 5 und 6 in einer perspektivischen Darstellung mit einem Schnitt durch den äußeren Strömungskanal im Verbindungsbereich und
- Fig. 8:: ein Mittelglied in einer zweiten Ausführungsform mit zwei umlaufenden Strömungskanälen gemäß den Fig. 5, 6 und 7 in einer perspektivischen Darstellung mit einem Schnitt durch den inneren Strömungskanal im Verbindungsbereich.

Der Gliederheizkessel besteht im Wesentlichen aus ringförmigen Gliedern, nämlich aus einem Vorderglied 1, zwei Hintergliedern 2 und mindestens einem Mittelglied 3. Diese bilden einen Brennraum 4 und deren ringförmige Wasserräume 5 stehen miteinander in Verbindung.

Der so aus einem Gliederblock gebildete Wärmetauscher besitzt spaltartige Heizgaszüge 6, die sich zwischen zwei benachbarten Gliedern 1, 2, 3 mit einer einander zugeordneten Geometrie etwa radial nach außen erstrecken. Rücklaufanschluss 7 und Vorlaufanschluss 8 befinden sich auf gegenüberliegenden Seiten des Gliederblockes.

Erfindungsgemäß sind die Heizgaszüge in einen Primärabschnitt P und einen Sekundärabschnitt S unterteilt. Das Vorderglied 1 und mindestens ein Mittelglied 3 gehören somit wasser- und heizgasseitig zum Primärabschnitt P, wogegen die beiden Hinterglieder 2 den Sekundärabschnitt S bilden.

Die Heizgaszüge 6 verlaufen im Primärabschnitt P, jeweils ausgehend vom Brennraum 4, etwa radial nach außen, münden in einen Abgassammelraum 9 in Form eines Hohlzylinders auf der Außenseite der Glieder 1, 2, 3 ein und strömen dort in den Sekundärabschnitt S über. Im Sekundärabschnitt S verlaufen die Heizgaszüge 6, ausgehend vom Abgassammelraum 9, zwischen den beiden Hintergliedern 2 und auf der Außenseite des äußeren Hintergliedes 2 etwa radial nach innen zu einem Abgasstutzen 10 im Zentrum des Sekundärabschnittes S.

Die Hinterglieder 2 weisen in Verlängerung des Abgasstutzens 10 mindestens ein Durchbrechung 11 auf, welche innerhalb des brennraumnahen Hintergliedes 2 mit einem Verschlussstopfen 12 heizgasseitig verschlossen ist. Weiterhin ist ein Kondenswasserablauf 13 vorgesehen.

Die Wasserräume aller Glieder 1, 2, 3 werden, ausgehend vom Rücklaufanschluss 7, in Reihe durchströmt und dass die einzelnen Glieder 1, 2, 3 sind jeweils nur an einer Stelle am Umfang, in den Darstellungen im oberen Bereich, hydraulisch mit Überströmöffnungen 14 versehen. In diesen Verbindungsbereichen mit benachbarten Gliedern 1, 2, 3 sind Flachdichtungen als Dichtmittel vorgesehen.

Innerhalb der jeweiligen Überströmöffnungen 14 ist jeweils ein Strömungsleitmittel 15 angebracht, welches aus einer den Wasserraum 5 quer aufteilenden, etwa vertikal zur Achse des Verbindungsbereiches ausgerichteten Wand besteht. Diese verschließt den jeweiligen Strömungskanal und lenkt die eintretende Strömung aus der Axial- in die Umfangsrichtung sowie die austretende Strömung aus der Umfangs- in die Axialrichtung jeweils ins benachbarte Glied 1, 2, 3. Rücklaufanschluss 7, Vorlaufanschluss 8 und Überströmöffnungen 14 zwischen zwei benachbarten Gliedern sind auf einer Achse fluchtend angeordnet.

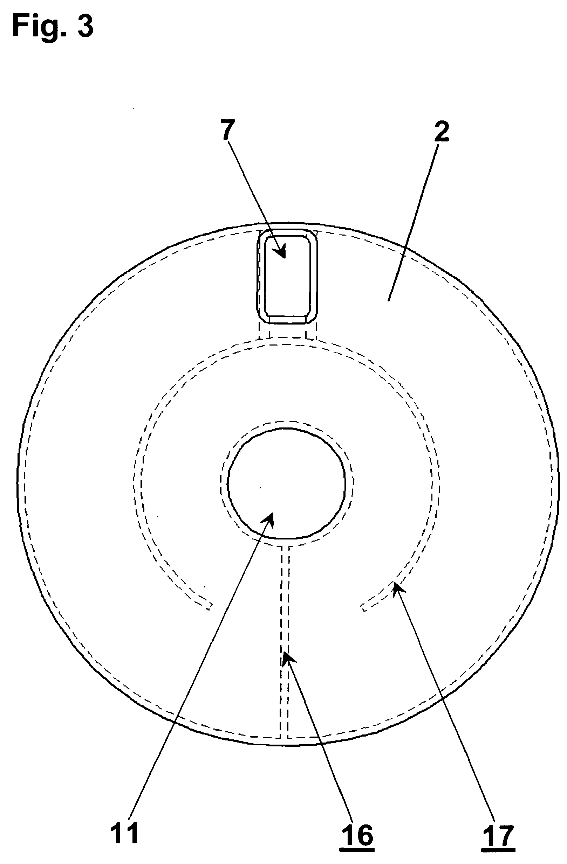

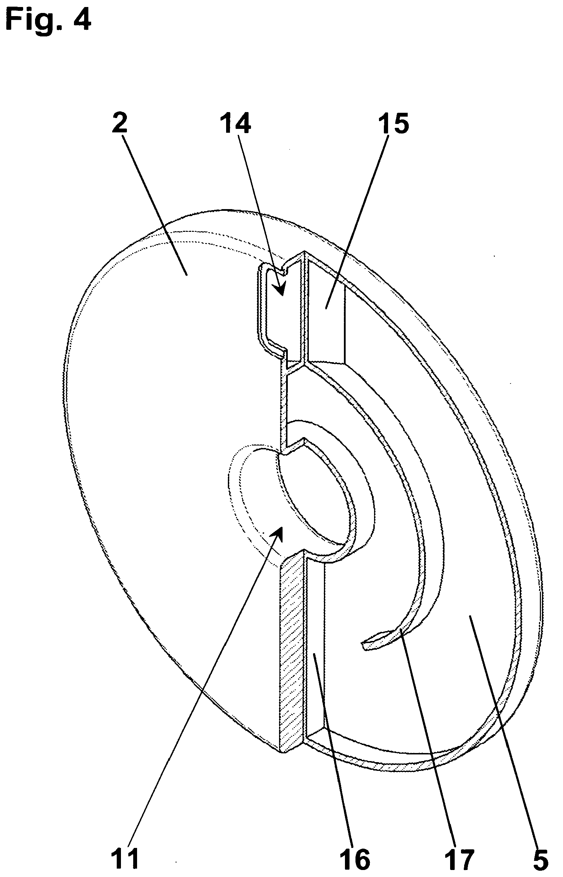

Die Figuren 3 und 4 zeigen in den beiden zwei Hintergliedem 2 jeweils eine im Wasserraum 5 auf der Symmetrieachse verlaufende, gegenüber dem Verbindungsbereich um 180 Grad versetzt angeordnete Trennwand 16 zwischen der Wand der Durchbrechung 11 und der Innenseite der äußeren Begrenzungswand. In den Darstellungen zeigt die Trennwand 16 vertikal nach unten und teilt Wasserraum 5 jeweils in zwei Hälften. Weiterhin befindet sich in den beiden Hintergliedern 2 jeweils im Wasserraum 5 eine symmetrisch angeordnete, auf einem Teilkreis umlaufende und im Bereich der Trennwand 16 ausgesparte Wand 17. Dadurch wird das Rücklaufwasser, ausgehend vom oberen Rücklaufanschluss 7 in jedem Hinterglied 2 mit dem Strömungsleitmittel 15 zunächst in einer Hälfte außerhalb der umlaufenden Wand 16 nach unten gelenkt, strömt nahe der Trennwand 16 in den inneren, durchmesserkleineren Strömungskanal innerhalb umlaufenden Wand 17 ein, gelangt um die Durchbrechung 11 herum, strömt dann auf der anderen Seite der Trennwand 16 wieder außerhalb der umlaufenden Wand 17 nach oben und tritt im Verbindungsbereich auf der Rückseite des Strömungsleitmittels 15 in das benachbarte Glied 2, 3 über.

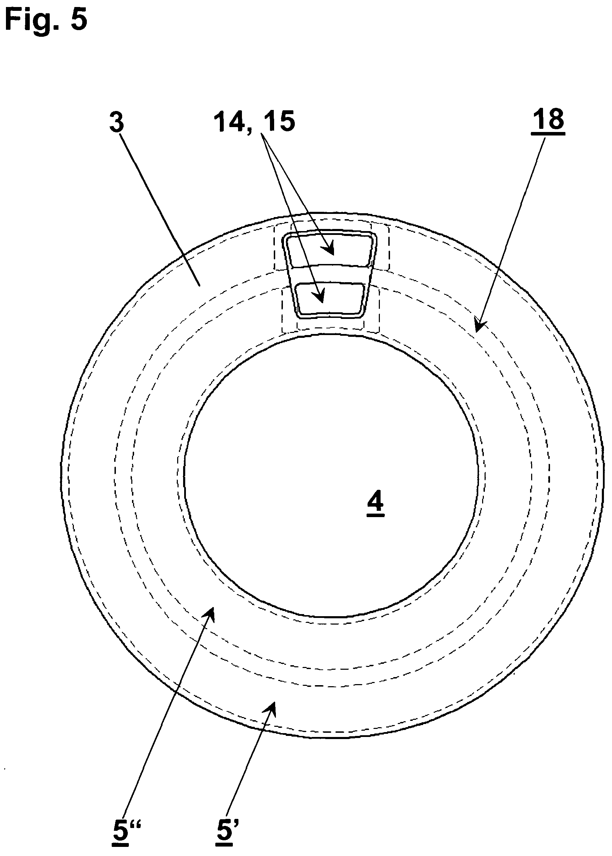

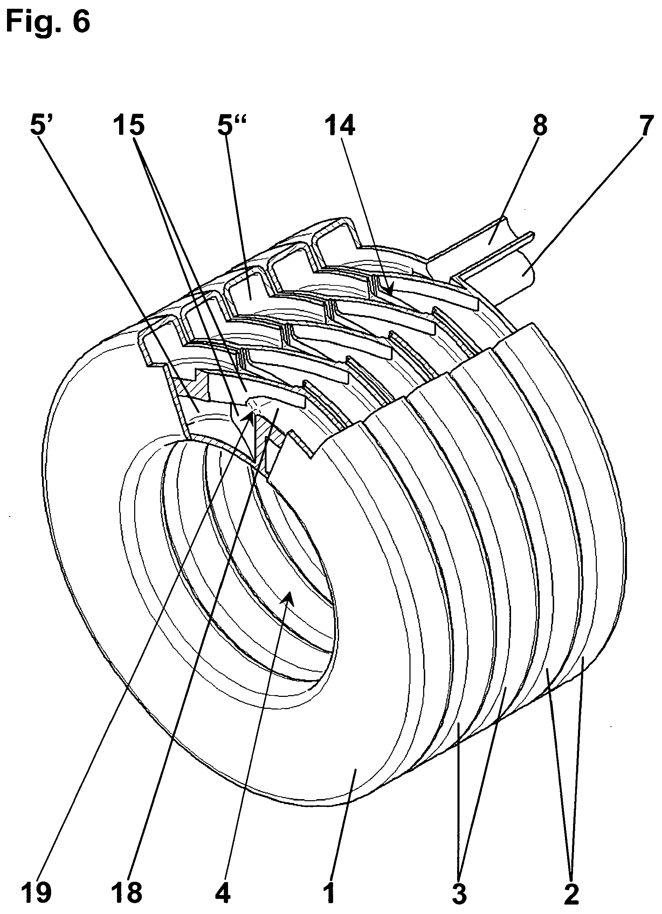

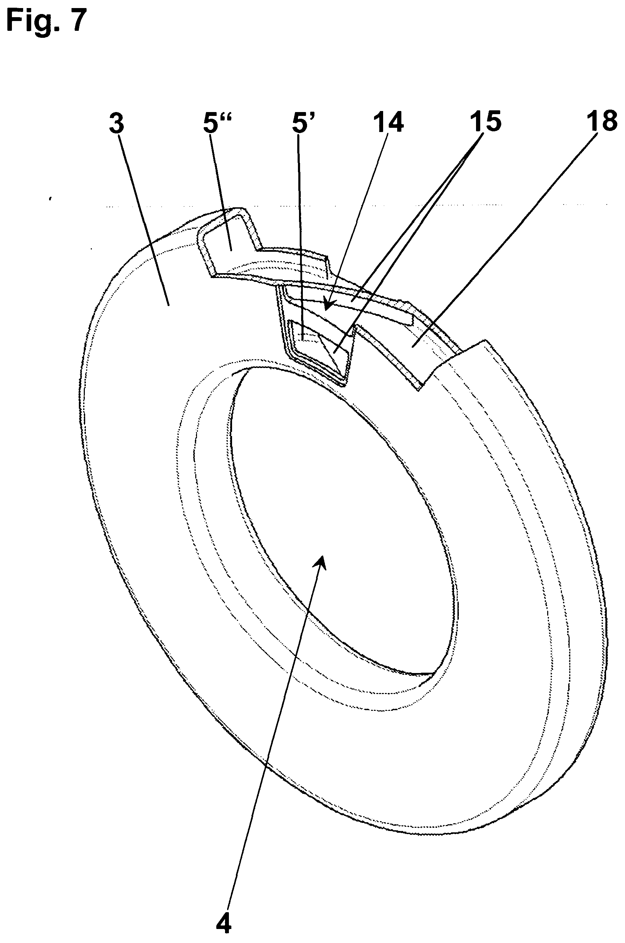

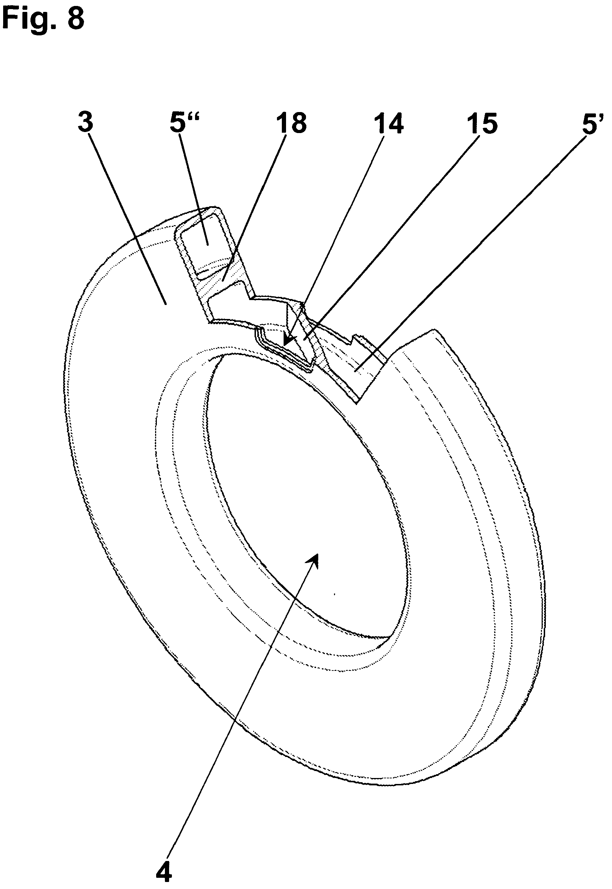

Gemäß den Fig. 5 bis 8 sind die Wasserräume 5 der einzelnen Glieder 1, 2, 3 in einer zweiten Ausführungsform jeweils in Umfangsrichtung in zwei Strömungskanäle 5', 5" aufgeteilt und besitzen dazu eine umlaufende eine Trennwand 18. Es entsteht dadurch ein innerer, brennkammemaher Strömungskanal 5' und ein äußerer, durchmessergrößerer Strömungskanal 5", wobei der innere, brennkammernahe Strömungskanal 5' einen geringeren Querschnitt als der äußere, brennkammerfeme Strömungskanal 5" aufweist und wobei in jedem Glied 1, 2, 3 zunächst der äußere und danach der innere Strömungskanal 5', 5" durchströmt wird. Bei der zweiten Ausführungsform befindet sich daher der Vorlaufanschlussstutzen 8 auch am Hinterglied 2, nämlich oberhalb des Rücklaufanschlussstutzens 7.

Die Überleitung innerhalb der jeweiligen Überströmöffnungen 14 erfolgt wie vorstehend beschrieben mit Strömungsleitmitteln 15, welches allerdings dann jeweils in den einzelnen Strömungskanälen 5', 5" angebracht ist. Im Vorderglied 1 ist im Bereich der Strömungsleitmittel 15, im Übergangsbereich zwischen den Strömungskanälen 5', 5", eine Überströmöffnung 19 in der in Umfangsrichtung verlaufenden Trennwand 18 zwischen den Strömungskanälen 5', 5" angeordnet, so dass sich dort mit dem Kanalwechsel die Strömungsrichtung umkehrt.

## Patentansprüche

1. Gliederheizkessel, insbesondere Brennwertkessel, mit im Wesentlichen ringförmigen Gliedern, wobei ein Vorderglied (1), mindestens ein Hinterglied (2) und mindestens ein Mittelglied (3) vorgesehen sind, die einen Brennraum (4) mit einem im Wesentlichen umgebenden Wärmetauscher aus einem Gliederblock bilden, dessen ringförmige Wasserräume (5, 5', 5") miteinander in Verbindung stehen und welcher spaltartige Heizgaszüge (6) aufweist, die sich zwischen zwei benachbarten Gliedern (1, 2, 3) mit einer einander zugeordneten Geometrie etwa radial erstrecken und in einen Abgassammelraum (9) einmünden, sowie mit einem Rücklaufanschluss (7) und einem Vorlaufanschluss (8), wobei der Rücklaufanschluss (7) und der Vorlaufanschluss (8) auf gegenüber liegenden Seiten des Gliederblockes angebracht sind, wobei die Wasserräume (5, 5', 5") der Glieder, ausgehend vom Rücklaufanschluss (7), in Reihe durchströmt werden und wobei die einzelnen Glieder (1, 2, 3) jeweils nur an einer Stelle am Umfang hydraulisch mit Überströmöffnungen (14) versehen und mit diesen auf mindestens einer Seite mit einem benachbarten Glied (1, 2, 3) verbunden sind,
**dadurch gekennzeichnet, dass** der Gliederheizkessel aus Gusseisen oder Aluminium besteht, und dass die Überströmöffnungen (14) als hydraulische Verbindung in das jeweils benachbarte Glied (1, 2, 3) vorgesehen sind, und dass jeweils im Verbindungsbereich innerhalb der Überströmöffnungen (14) mindestens ein Strömungsleitmittel (15) im Wasserraum (5, 5', 5") angebracht ist.

2. Gliederheizkessel nach Anspruch 1,
**dadurch gekennzeichnet, dass** ein Strömungsleitmittel (15) im Verbindungsbereich des Wasserraumes (5) aus einer im Wesentlichen den Wasserraum (5) quer aufteilenden, vertikal zur Achse des Verbindungsbereiches ausgerichteten Wand besteht, welche den jeweiligen Strömungskanal (5', 5") verschließt sowie die eintretende Strömung aus der Axialin die Umfangsrichtung lenkt und die austretende Strömung aus der Umfangs- in die Axialrichtung ins benachbarte Glied (1, 2, 3) lenkt.

3. Gliederheizkessel nach den Ansprüchen 1 oder 2,
**dadurch gekennzeichnet, dass** ein Strömungsleitmittel (15) in Form einer den Wasserraum (5) quer aufteilenden, vertikal zur Achse des Verbindungsbereiches ausgerichteten Wand etwa im Winkel von 30 bis 50 Grad schräg im jeweiligen Strömungskanal (5', 5") angeordnet ist.

4. Gliederheizkessel nach einem der Ansprüche 1 bis 3,
**dadurch gekennzeichnet, dass** Rücklaufanschluss (7), Vorlaufanschluss (8) und Überströmöffnungen (14) zwischen zwei benachbarten Gliedern (1, 2, 3) auf einer Achse fluchtend angeordnet sind und dass die Überströmöffnungen (14) nur an einer Stelle am Umfang der Glieder (1, 2, 3) vorhanden sind.

5. Gliederheizkessel nach einem der Ansprüchen 1 bis 4,
**dadurch gekennzeichnet, dass** die Heizgaszüge (6) in einen Primärabschnitt (P), gebildet von dem Vorderglied (1) und mindestens einem Mittelglied (3) sowie einen Sekundärabschnitt (S), gebildet von mindestens zwei Hintergliedem (2), unterteilt sind, wobei im Primärabschnitt (P) die Heizgaszüge (6) jeweils ausgehend vom Brennraum (4) etwa radial nach außen verlaufen und in einen Abgassammelraum (9) auf der Außenseite der Glieder (1, 2, 3) einmünden, wobei die Heizgase dort in den Sekundärabschnitt (S) überströmen und wobei im Sekundärabschnitt (S) mindestens ein Heizgaszug (6) ausgehend vom Abgassammelraum (9) etwa radial nach innen zu einem Abgasstutzen (10) verläuft.

6. Gliederheizkessel nach Anspruch 5,
**dadurch gekennzeichnet, dass** der Abgasstutzen (10) auf der gemeinsamen Mittelachse von Gliedern (1, 2, 3) und Brennraum (4) angeordnet ist.

7. Gliederheizkessel nach Ansprüchen 5 oder 6,
**dadurch gekennzeichnet, dass** die mindestens zwei Hinterglieder (2) in Verlängerung des Abgasstutzens (10) mindestens eine Durchbrechung (11) aufweisen, und dass diese innerhalb des brennraumnahen Hintergliedes (2) mit einem Verschlussstopfen (12) heizgasseitig verschlossen ist.

8. Gliederheizkessel nach Anspruch 7,
**dadurch gekennzeichnet, dass** die mindestens zwei Hinterglieder (2) jeweils im Wasserraum (5) eine auf der Symmetrieachse verlaufende, gegenüber dem Verbindungsbereich um etwa 180 Grad versetzt angeordnete Trennwand (16) zwischen der Wand der Durchbrechung (11) und der Innenseite der äußeren Begrenzungswand aufweisen, welche den Wasserraum (5) jeweils in zwei Hälften teilt.

9. Gliederheizkessel nach Anspruch 8,
**dadurch gekennzeichnet, dass** die mindestens zwei Hinterglieder (2) jeweils im Wasserraum (5) eine symmetrisch angeordnete, auf einem Großteil eines Teilkreises umlaufende und im Bereich der Trennwand (16) zwischen der Wand der Durchbrechung (11) und der Innenseite der äußeren Begrenzungswand ausgesparte Wand (17) aufweisen, so dass Rücklaufwasser, ausgehend vom oberen Rücklaufanschluss (7) in jedem Hinterglied (2) mit dem Strömungsleitmittel (15) zunächst in einer Hälfte außerhalb der teilweise umlaufenden Wand (17) nach unten gelenkt wird, nahe der Trennwand (16) in den inneren, durchmesserkleineren Strömungskanal innerhalb umlaufenden Wand (17) einströmt, um die Durchbrechung (11) herum gelangt, dann auf der anderen Seite der Trennwand (16) wieder außerhalb der umlaufenden Wand (17) nach oben strömt und im Verbindungsbereich auf der Rückseite des Strömungsleitmittels (15) in das benachbarte Glied (2, 3) übertritt.

10. Gliederheizkessel nach einem der Ansprüche 1 bis 7,
**dadurch gekennzeichnet, dass** die einzelnen Glieder (1, 2, 3) jeweils heizwasserseitig mindestens eine in Umfangsrichtung umlaufende Trennwand (18) aufweisen und in mindestens einen inneren, brennkammernahen Strömungskanal (5') und mindestens einen äußeren, durchmessergrößeren Strömungskanal (5") aufgeteilt sind, wobei der innere, brennkammemahe Strömungskanal (5') einen geringeren Querschnitt als der äußere, brennkammerfeme Strömungskanal (5") aufweist und wobei in jedem Glied (1, 2, 3) zunächst der äußere und danach der innere Strömungskanal (5', 5") durchströmt wird.

11. Gliederheizkessel nach Anspruch 10,
**dadurch gekennzeichnet, dass** im Vorderglied (1) im Bereich der Strömungsleitmittel (15) in den Strömungskanälen (5', 5") eine Überströmöffnung (19) in der in Umfangsrichtung verlaufenden Trennwand (18) zwischen den Strömungskanälen (5', 5") angeordnet ist.

12. Gliederheizkessel nach den Ansprüchen 10 oder 11,
**dadurch gekennzeichnet, dass** die Strömungsleitmittel (15) im Wesentlichen aus einer vertikal auf der in Umfangsrichtung verlaufenden Trennwand (18) stehenden Wand bestehen, welche den jeweiligen Strömungskanal (5', 5") verschließt.

13. Gliederheizkessel nach einem der Ansprüche 10 bis 12,
**dadurch gekennzeichnet, dass** die jeweiligen Strömungsleitmittel (15) im inneren und äußeren Strömungskanal (5', 5") so angeordnet sind, dass diese sich kreuzen.

## Claims

1. Sectional boiler, in particular condensing boiler, having essentially annular sections, there being provided a front section (1), at least one rear section (2) and at least one central section (3) which form a combustion chamber (4) having an essentially surrounding heat exchanger consisting of a section block, the annular water chambers (5, 5', 5") of which are connected to one another and which has gap-like heating gas flues (6) which extend approximately radially between two adjacent sections (1, 2, 3) with matching shapes and open into an exhaust gas collection chamber (9), and having a return-flow connection (7) and a forward-flow connection (8), wherein the return-flow connection (7) and the forward-flow connection (8) are attached on opposing sides of the section block, wherein the water chambers (5, 5', 5") of the sections are flowed through in series proceeding from the return-flow connection (7) and wherein the individual sections (1, 2, 3) are each provided with flow transfer openings (14) at only one point on the circumference and are connected thereby, on at least one side, to an adjacent section (1, 2, 3),
**characterized in that** the sectional boiler is made of cast iron or aluminium, and **in that** the flow transfer openings (14) are provided as a hydraulic connection to the respective adjacent section (1, 2, 3), and **in that**, in each case in the connection region within the flow transfer openings (14), at least one flow guiding means (15) is installed in the water chamber (5, 5', 5").

2. Sectional boiler according to Claim 1,
**characterized in that** flow guiding means (15) in the connection region of the water chamber (5) consists of a wall oriented vertically with respect to the axis of the connection region and dividing the water chamber (5) essentially transversely, which wall closes the respective flow passage (5', 5") and deflects the incoming flow from the axial direction to the circumferential direction and deflects the outgoing flow from the circumferential direction to the axial direction into the adjacent section (1, 2, 3).

3. Sectional boiler according to Claim 1 or 2,
**characterized in that** a flow guiding means (15) in the form of a wall oriented vertically with respect to the axis of the connection region and dividing the water chamber (5) transversely is arranged diagonally with respect to the respective flow passage (5', 5"), at an angle of approximately 30 to 50 degrees.

4. Sectional boiler according to one of Claims 1 to 3,
**characterized in that** the return-flow connection (7), the forward-flow connection (8) and the flow transfer openings (14) between two adjacent sections (1, 2, 3) are arranged in line on an axis, and **in that** the flow transfer openings (14) are present at just one location on the circumference of the sections (1, 2, 3).

5. Sectional boiler according to one of Claims 1 to 4,
**characterized in that** the heating gas flues (6) are split into a primary section (P), formed by the front section (1) and at least one central section (3), and a secondary section (S), formed by at least two rear sections (2), wherein in the primary section (P) the heating gas flues (6), in each case proceeding from the combustion chamber (4), run approximately radially outwards and discharge into an exhaust gas collection chamber (9) on the outside of the sections (1, 2, 3), the heating gases flowing there into the secondary section (S) and wherein in the secondary section (S) at least one heating gas flue (6) runs approximately radially inwards to an exhaust gas pipe (10), proceeding from the exhaust gas collection chamber (9).

6. Sectional boiler according to Claim 5,
**characterized in that** the exhaust gas pipe (10) is arranged on the common central axis of the sections (1, 2, 3) and the combustion chamber (4).

7. Sectional boiler according to Claim 5 or 6,
**characterized in that** the at least two rear sections (2) have at least one opening (11) in the continuation of the exhaust gas pipe (10), and **in that** this opening is closed on the heating gas side with a closure plug (12) within the rear section (2) close to the combustion chamber.

8. Sectional boiler according to Claim 7,
**characterized in that** the at least two rear sections (2) each have in the water chamber (5) a partition wall (16), running along the axis of symmetry and arranged offset by approximately 180 degrees with respect to the connection region, between the wall of the opening (11) and the inside of the outer boundary wall, which in each case divides the water chamber (5) into two halves.

9. Sectional boiler according to Claim 8,
**characterized in that** the at least two rear sections (2) each have, in the water chamber (5), a symmetrically arranged wall (17) which runs in encircling fashion over a large part of a circle and is hollow in the region of the partition wall (16) between the wall of the opening (11) and the inside of the outer boundary wall, such that return-flow water, proceeding from the upper return-flow connection (7) in each rear section (2) with the flow guiding means (15) is first deflected downwards in a half outside the partially circumferential wall (17), close to the partition wall (16) flows into the inner flow passage of smaller diameter within the circumferential wall (17), passes around the opening (11), then on the other side of the partition wall (16) once again flows upwards outside the circumferential wall (17) and, in the connection region on the rear side of the flow guiding means (15), passes into the adjacent section (2, 3).

10. Sectional boiler according to one of Claims 1 to 7,
**characterized in that** the individual sections (1, 2, 3) have, in each case on the heating water side, at least one partition wall (18) which runs in encircling fashion in the circumferential direction, and are split into at least one inner flow passage (5') close to the combustion chamber and at least one outer flow passage (5") of larger diameter, wherein the inner flow passage (5') close to the combustion chamber has a smaller cross section than the outer flow passage (5") remote from the combustion chamber, and wherein in each section (1, 2, 3) the flow passes first through the outer flow passage (5") and then through the inner flow passage (5').

11. Sectional boiler according to Claim 10,
**characterized in that**, in the front section (1), in the region of the flow guiding means (15) in the flow passages (5', 5"), a flow transfer opening (19) is arranged in the partition wall (18) running in the circumferential direction between the flow passages (5', 5").

12. Sectional boiler according to Claim 10 or 11,
**characterized in that** the flow guiding means (15) consist essentially of a wall standing vertically on the partition wall (18) running in the circumferential direction, which closes the respective flow passage (5', 5").

13. Sectional boiler according to one of Claims 10 to 12,
**characterized in that** the respective flow guiding means (15) in the inner and outer flow passage (5', 5") are arranged such that they intersect.

## Revendications

1. Chaudière sectionnée, en particulier chaudière à condensation, avec des sections essentiellement annulaires, dans laquelle il est prévu une section avant (1), au moins une section arrière (2) et au moins une section intermédiaire (3), qui forment une chambre de combustion (4) avec un échangeur de chaleur essentiellement périphérique en un bloc sectionné, dont des chambres d'eau annulaires (5, 5', 5") sont en communication l'une avec l'autre et qui présente des conduits de gaz chaud en forme de fentes (6), qui s'étendent environ radialement entre deux sections voisines (1, 2, 3) avec une géométrie adaptée l'une à l'autre et qui débouchent dans une chambre de collecte de gaz d'échappement (9), ainsi qu'avec un raccord de retour (7) et un raccord d'arrivée (8), dans laquelle le raccord de retour (7) et le raccord d'arrivée (8) sont placés sur des côtés opposés du bloc sectionné, dans laquelle les chambres d'eau (5, 5', 5") des sections sont parcourues en série à partir du raccord de retour (7), et dans laquelle les sections individuelles (1, 2, 3) ne sont respectivement munies qu'à un seul endroit à la périphérie de façon hydraulique d'ouvertures de débordement (14) et elles sont raccordées avec celles-ci sur au moins un côté à une section voisine (1, 2, 3), **caractérisée en ce que** la chaudière sectionnée est composée de fonte ou d'aluminium et **en ce que** les ouvertures de débordement (14) sont prévues comme communication hydraulique dans la section respectivement voisine (1, 2, 3), et **en ce qu'**au moins un moyen de guidage d'écoulement (15) est placé dans la chambre d'eau (5, 5', 5") respectivement dans la région de communication à l'intérieur des ouvertures de débordement (14).

2. Chaudière sectionnée selon la revendication 1, **caractérisée en ce qu'**un moyen de guidage d'écoulement (15) dans la région de communication de la chambre d'eau (5) se compose d'une paroi divisant essentiellement la chambre d'eau (5) transversalement et orientée verticalement par rapport à l'axe de la région de communication, qui ferme le canal d'écoulement respectif (5', 5") et qui dévie l'écoulement entrant de la direction axiale à la direction périphérique et qui dévie l'écoulement sortant de la direction périphérique à la direction axiale dans la section voisine (1, 2, 3).

3. Chaudière sectionnée selon les revendications 1 ou 2, **caractérisée en ce qu'**un moyen de guidage d'écoulement (15) sous la forme d'une paroi divisant la chambre d'eau (5) transversalement et orientée verticalement par rapport à l'axe de la région de communication est disposé en oblique dans le canal d'écoulement respectif (5', 5") environ sous un angle de 30 à 50 degrés.

4. Chaudière sectionnée selon l'une quelconque des revendications 1 à 3, **caractérisée en ce que** le raccord de retour (7), le raccord d'arrivée (8) et les ouvertures de débordement (14) entre deux sections voisines (1, 2, 3) sont disposés en alignement sur un axe et **en ce que** les ouvertures de débordement (14) ne sont présentes qu'en un endroit à la périphérie des sections (1, 2, 3).

5. Chaudière sectionnée selon l'une quelconque des revendications 1 à 4, **caractérisée en ce que** les conduits de gaz chauds (6) sont divisés en une partie primaire (P), formée par la section avant (1) et au moins une section intermédiaire (3), ainsi qu'une section secondaire (S), formée par au moins deux sections arrière (2), dans laquelle les conduits de gaz chauds (6) dans la partie primaire (P) s'étendent environ radialement vers l'extérieur respectivement à partir de la chambre de combustion (4) et débouchent dans une chambre de collecte de gaz d'échappement (9) sur le côté extérieur des sections (1, 2, 3), dans laquelle les gaz chauds y débordent dans la partie secondaire (S) et dans laquelle au moins un conduit de gaz chauds (6) dans la partie secondaire (S) s'étend environ radialement vers l'intérieur vers un tuyau de gaz d'échappement (10) à partir de la chambre de collecte de gaz d'échappement (9).

6. Chaudière sectionnée selon la revendication 5, **caractérisée en ce que** le tuyau de gaz d'échappement (10) est disposé sur l'axe central commun de sections (1, 2, 3) et de la chambre de combustion (4).

7. Chaudière sectionnée selon les revendications 5 ou 6, **caractérisée en ce que** lesdites au moins deux sections arrière (2) présentent, dans le prolongement du tuyau de gaz d'échappement (10), au moins une traversée (11), et **en ce que** celle-ci est fermée du côté des gaz chauds, à l'intérieur de la section arrière (2) proche de la chambre de combustion, avec un bouchon de fermeture (12).

8. Chaudière sectionnée selon la revendication 7, **caractérisée en ce que** lesdites au moins deux sections arrière (2) présentent, respectivement dans la chambre d'eau (5), une paroi de séparation (16) orientée suivant l'axe de symétrie, disposée en position décalée d'environ 180 degrés par rapport à la région de communication, entre la paroi de la traversée (11) et le côté intérieur de la paroi de limitation extérieure, et qui divise la chambre d'eau (5) chaque fois en deux moitiés.

9. Chaudière sectionnée selon la revendication 8, **caractérisée en ce que** lesdites au moins deux sections arrière (2) présentent chacune dans la chambre d'eau (5) une paroi (17) disposée de façon symétrique, s'étendant sur une grande partie d'un cercle partiel et découpée dans la région de la paroi de séparation (16) entre la paroi de la traversée (11) et le côté intérieur de la paroi de limitation extérieure, de telle manière que l'eau de retour soit déviée vers le bas, à partir du raccord de retour supérieur (7) dans chaque section arrière (2), avec le moyen de guidage d'écoulement (15) d'abord dans une moitié à l'extérieur de la paroi partiellement périphérique (17), s'écoule près de la paroi de séparation (16) dans le canal d'écoulement intérieur de plus petit diamètre à l'intérieur de la paroi périphérique (17), arrive autour de la traversée (11), puis s'écoule de nouveau vers le haut sur l'autre côté de la paroi de séparation (16) à l'extérieur de la paroi périphérique (17) et déborde dans la section voisine (2, 3) dans la région de communication sur le côté arrière du moyen de guidage d'écoulement (15).

10. Chaudière sectionnée selon l'une quelconque des revendications 1 à 7, **caractérisée en ce que** les sections individuelles (1, 2, 3) présentent chacune du côté de l'eau chaude au moins une paroi de séparation (18) périphérique dans la direction périphérique et sont divisées en au moins un canal d'écoulement intérieur (5') proche de la chambre de combustion et au moins un canal d'écoulement extérieur (5") de plus grand diamètre, dans laquelle le canal d'écoulement intérieur (5') proche de la chambre de combustion présente une plus petite section transversale que le canal d'écoulement extérieur (5") éloigné de la chambre de combustion et dans laquelle, dans chaque section (1, 2, 3), le canal d'écoulement extérieur (5") est parcouru d'abord et ensuite le canal d'écoulement intérieur (5').

11. Chaudière sectionnée selon la revendication 10, **caractérisée en ce qu'**une ouverture de débordement (19) est disposée dans la section avant (1), dans la région des moyens de guidage d'écoulement (15) dans les canaux d'écoulement (5', 5"), dans la paroi de séparation (18) s'étendant en direction périphérique entre les canaux d'écoulement (5', 5").

12. Chaudière sectionnée selon les revendications 10 ou 11, **caractérisée en ce que** les moyens de guidage d'écoulement (15) se composent essentiellement d'une paroi placée verticalement sur la paroi de séparation (18) s'étendant en direction périphérique, et qui ferme le canal d'écoulement respectif (5', 5").

13. Chaudière sectionnée selon l'une quelconque des revendications 10 à 12, **caractérisée en ce que** les moyens de guidage d'écoulement respectifs (15) sont disposés dans le canal d'écoulement intérieur et extérieur (5', 5"), de telle manière que ceux-ci se croisent.
